# EUROPÄISCHE PATENTSCHRIFT

(11) **EP 0 334 953 B1**
(45) Veröffentlichungstag und Bekanntmachung des Hinweises auf die Patenterteilung: **03.02.1993**
(21) Anmeldenummer: 89900206.7
(22) Anmeldetag: 12.10.1988
(51) Int. Cl.: B23Q 5/04

(54) **FRÄS- UND BOHRKOPF MIT MEHREREN STEUERBAREN ACHSEN**
MILLING AND BORING HEAD WITH A PLURALITY OF CONTROLLABLE AXES
TETE DE FRAISAGE ET DE PERCEMENT A AXES MULTIPLES DE REGLAGE

(30) Priorität: 14.10.1987 IT 2254287
(43) Veröffentlichungstag der Anmeldung: 04.10.1989
(73) Patentinhaber: SAN ROCCO MACCHINE S.R.L., I-21047 Saronno (Va) (IT)
(72) Erfinder: BERETTA, Giovanni, I-20100 Milano (IT)
(74) Vertreter: Mayer, Hans Benno, Dipl.-Ing.
(86) Internationale Anmeldenummer: EP8800914
(87) Internationale Veröffentlichungsnummer: WO8903277

(56) Entgegenhaltungen:
- CA-A- 1 158 084
- CH-A- 352 215
- DE-A- 1 477 751
- US-A- 3 460 435
- US-A- 3 483 796

## Beschreibung

Die Erfindung betrifft einen Fräs- und Bohrkopf nach dem Oberbegriff des Patentanspruchs 1.

Aus der Schrift US-A-3.483.796 ist ein Fraes- und Bohrkopf fuer eine Werkzeugmaschine bekannt geworden, bei der zwar ein Verschwenken des Fraes- und Bohrkopfes um mehrere Achsen moeglich ist, eine hochpraezise Bearbeitung des Werkstueckes waehrend der Verschwenkbewegung der Spindel ist aber nicht moeglich. Nach Verschwenken des beschriebenen Fraes- und Bohrkopfes in eine gewuenschte Arbeitslage ist dieser in seiner eingenommenen Stellung zu verriegeln und erst dann kann der Arbeitsvorgang durchgefuehrt werden.

Desweiteren ist es mit dem bekannten Fraes- und Bohrkopf nicht moeglich, das Werkzeug kontinuierlich und mit hoher Praezision in verschiedenen Ebenen gesteuert zu verschwenken.

Aufgabe der vorstehenden Erfindung ist es, die Nachteile des Standes der Technik zu vermeiden und einen Fraes- und Bohrkopf vorzuschlagen, mit dem es moeglich ist, das Bearbeitungswerkzeug um zwei Achsen gesteuert zu bewegen und einen Kopf mit hoher Bearbeitungsgenauigkeit zu schaffen, bei dem besonders der mechanische Aufbau und die eingesetzten elektronischen Bauteile in einem sehr ausgewogenen Verhaeltnis gegenueber bekannten Koepfen dieser Art stehen, um einen Bearbeitungskopf zu schaffen, mit dem eine erhebliche Zerspanungsleistung erreichbar ist, und Werkstuecke mit hoher Genauigkeit und geringer Oberflaechenrauhigkeit herstellbar sind.

Erfindungsgemaess wird diese Aufgabe mit einem Fraes- und Bohrkopf mit mehreren steuerbaren Achsen fuer eine Werkzeugmaschine geloest, wobei der Kopf aus einer Haltevorrichtung besteht, die mit der Werkzeugmaschine verbindbar ist und um eine erste Achse drehbar einen ersten Zahnkranz lagert, der mit dem Gehaeuse des Fraes- und Bohrkopfes verbunden ist, und im Inneren des drehbaren Gehaeuses ein weiterer Zahnkranz um eine zweite Achse drehbar gelagert ist, wobei jeder Zahnkranz ueber eine Gewindeschnecke mit einem steuerbaren Antriebsmotor in Wirkverbindung steht und jedem Zahnkranz ein Encoder zur Anzeige der Winkellage zugeordnet ist, und der Kopf dadurch gekennzeichnet ist, dass mit jedem Zahnkranz in gleicher Ebene zwei Ritzel kaemmen, deren Drehachsen parallel zur Achse des zugeordneten Zahnkranzes ausgerichtet sind, und jedes Ritzel mit einer Gewindeschnecke in Wirkverbindung steht, und die Gewindeschnecken eines Zahnkranzes auf einer Welle angeordnet sind.

Weitere Vorteile der Erfindung koennen der folgenden Beschreibung, den Unteranspruechen und den beigefuegten Zeichnungen entnommen werden.

Der Erfindungsgegenstand wird nun genauer anhand eines Ausfuehrungsbeispieles beschrieben und in den Zeichnungen dargestellt.

Es zeigen:
Fig. 1 schematisch die wichtigsten Bauteile des Fraes- und Bohrkopfes in perspektivischer Ansicht;
Fig. 2 den Fraes- und Bohrkopf in einer schematischen Seitenansicht; und
Fig. 3 den Fraes- und Bohrkopf im Schnitt entlang der Linie III-III der Fig. 2.

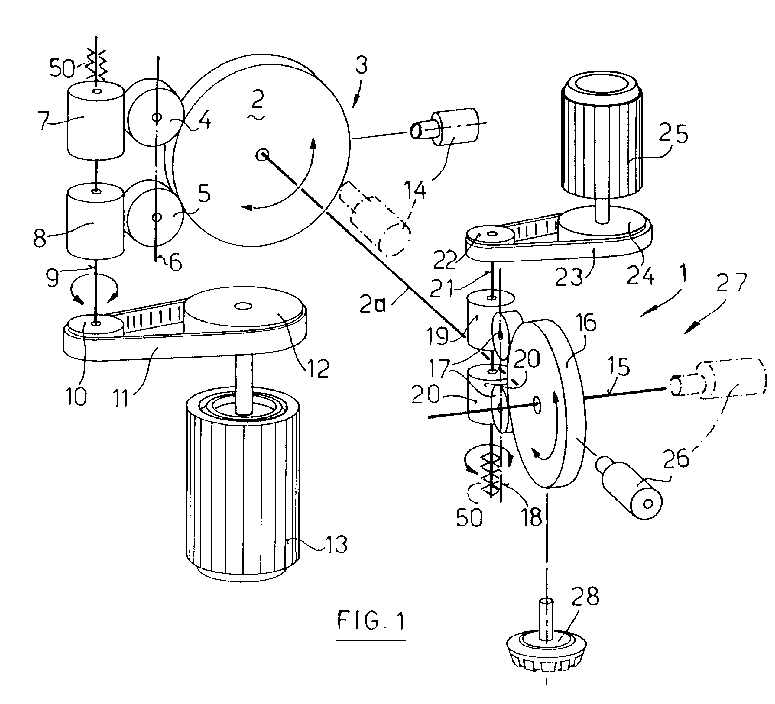

Wie der Fig. 1 zu entnehmen ist, ist der erfindungsgemaesse Fraes- und Bohrkopf gesamthaft mit 1 bezeichnet. Der Fraes- und Bohrkopf weist einen ersten Zahnkranz 2 auf, der drehbar in einem ersten Gehauese 3 angeordnet ist, wobei dieses Gehaeuse z.B. an dem Auslegerarm oder dem Staender einer nicht dargestellten Werkzeugmaschine befestigt ist.

Der Zahnkranz 2 wird ueber zwei im Abstand voneinander vorgesehenen Ritzel 4 und 6 angetrieben. Die Ritzel 4 und 5 sind derartig angeordnet, dass ihre Drehachse in einer gemeinsamen Ebene 6 angeordnet ist.

Mit jedem Ritzel 4 und 5 kaemmt eine Gewindeschnecke 7 bzw. 8. Die Gewindeschnecken 7, 8 sind auf einer gemeinsamen Welle 9 montiert. Die Welle 9 wird ueber eine Riemenscheibe 10, einen Riemen 11, z.B. einen Zahnriemen, sowie ueber eine Riemenscheibe 12 und einen Motor 13 angetrieben.

In vorteilhafter Weise ist der Motor 13 als Gleichstrommotor ausgebildet, der ueber eine nicht dargestellte NC-Einheit steuerbar ist. Dem Zahnkranz 2 ist ferner ein Encoder 14 zugeordnet. Damit wird es moeglich, jederzeit die genaue Winkellage des Zahnkranzes 2, d.h. die Winkellage des Zahnkranzes 2 gegenueber der eigenen Drehachse 2a aufzuzeigen.

Senkrecht zur Achse 2a ist eine weitere Achse 15 fuer einen zweiten Zahnkranz 16 angeordnet, der ueber zwei Ritzel 17 angetrieben wird, deren Drehachsen in einer gemeinsamen Ebene, die mit 18 gekennzeichnet ist, angeordnet sind.

Mit den Ritzeln 17 stehen Gewindeschnecken 19 und 20 in Wirkverbindung. Die Gewindeschnecken 19 und 20 sind auf einer gemeinsamen Welle 21 angeordnet, die mit einer Riemenscheibe 22 wirkverbunden ist, welche ueber einen Riemen 23 und eine Riemenscheibe 24 ueber einen Motor 25, in vorteilhafter Weise ueber einen steuerbaren Gleichstrommotor, angetrieben wird. Der Gleichstrommotor 25 ist in vorteilhafter Weise ueber eine nicht dargestellte NC-Einrichtung steuerbar.

Dem Zahnkranz 16 ist ein Encoder 26 zugeordnet, mit dem staendig die genaue Winkellage des Zahnkranzes 16 gegenueber der Achse 15 festgestellt werden kann. Die Bauteile 16 - 26 sind in einem Gehaeuse angeordnet, das gesamthaft mit 27 bezeichnet ist. Das Gehaeuse 27 ist verschwenkbar um die Achse 15 im Gehaeuse 3 angeordnet, das mit der Werkzeugmaschine verbunden ist. Das Gehaeuse 27 nimmt eine Welle auf, die zur Aufnahme des Werkzeuges 28 fuer die Spanabnahme dient und nur schematisch in der Fig. 1 dargestellt ist.

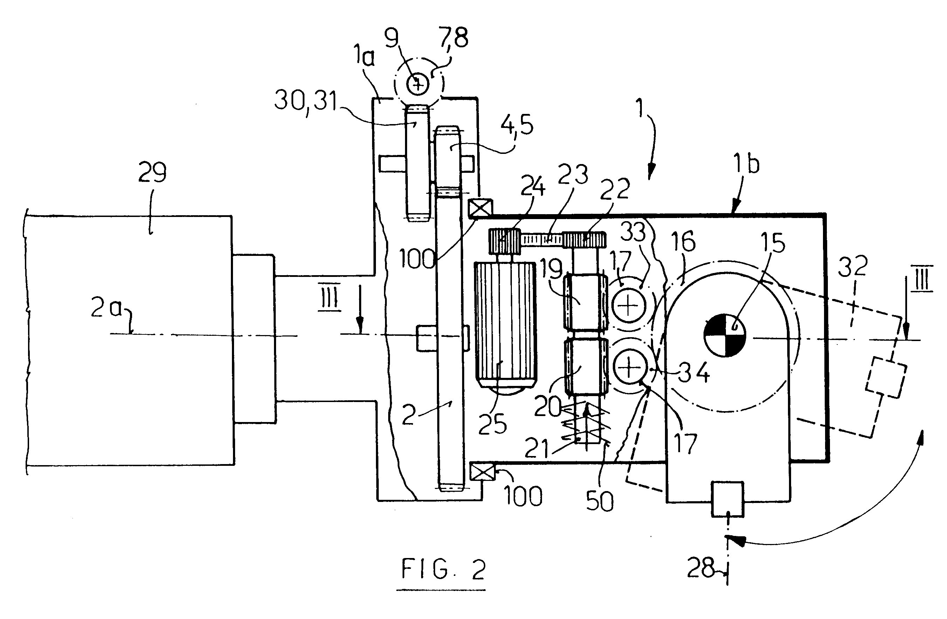

Der Fig. 2 kann entnommen werden, dass der Fraes- und Bohrkopf 1 entweder vom nicht dargestellten Staender einer Werkzeugmaschine, oder von einem robusten Auslegerarm 29, der in einer horizontal angordneten Ebene bewegbar ist, aufgenommen wird. Beruecksichtigt man, dass der Kopf 1 ein betraechtliches Gewicht aufweist und entsprechend seinen Abmessungen ein Gewicht bis zu ca. 900 kg erreichen kann, so wird deutlich, dass die Befestigung des Bohr- und Fraeskopfes mit geeigneten Mitteln vorgenommen wird (Schraubverbindung), um jegliche Ungenauigkeit bei der spanabhebenden Bearbeitung auszuschliessen.

Wie der Fig. 2 zu entnehmen ist, wird das Gehaeuse 1a mit dem horizontalen Ausleger 29 der Werkzeugmaschine verbunden. Im Gehaeuse 1a ist der Zahnkranz 2 drehbar gelagert. Der Zahnkranz 2 steht in Wirkverbindung mit den Ritzeln 4 und 5. Entsprechend einer vorteilhaften Ausfuehrungsform (nicht dargestellt in Fig. 1) sind die Ritzel 4 und 5 fest mit weiteren koaxial angeordneten Zahnraedern 30 und 31 verbunden. Diese letztgenannten Zahnraeder 30 und 31 weisen groesseren Durchmesser auf und stehen mit den Gewindeschnecken 7 und 8, die auf der Welle 9 angeordnet sind, in Wirkverbindung.

Das Gehaeuse 1a nimmt drehbar das Gehaeuse 1b unter Zwischenschaltung von Waelzlagern 100 auf. Ferner ist das Gehaeuse 1b fest mit dem Zahnkranz 2 verbunden, wodurch eine gesteuerte Drehbewegung des Gehaeuses 1b um die Achse 14 erfolgen kann. Im Gehaeuse 1b ist ein Aufnahmegehaeuse 32 angeordnet, das mit einer Querwelle wirkverbunden ist, die mit 15 gekennzeichnet ist. Mit der Welle 15 ist ein weiterer Zahnkranz 16 verbunden, der mit den Ritzeln 17 kaemmt. In vorteilhafter Weise sind auch die Ritzel 17 mit weiteren Zahnraedern 33 und 34 verbunden. Diese Zahnraeder 33 und 34 weisen groesseren Durchmesser auf und stehen mit Gewindespindeln 19 und 20 in Wirkverbindung. Diese Gewindespindeln 19 und 20 sind mit der Welle 21 fest verbunden. Die Welle ist mit einer Riemenscheibe 22 verbunden, welche ueber einen Antriebsriemen 23 mit einer Riemenscheibe 24 wirkverbunden ist. Die Riemenscheibe 24 wird ueber einen Motor 25 angetrieben, in vorteilhafter Weise ueber einen steuerbaren Gleichstrommotor 25. In vorteilhafter Weise ist ein Encoder 26 zur Lageanzeige, wie in Fig. 1 dargestellt, vorgesehen. In vorteilhafter Weise ist der Encoder 26 koaxial zur Achse oder zur Schwenkwelle 15 angeordnet.

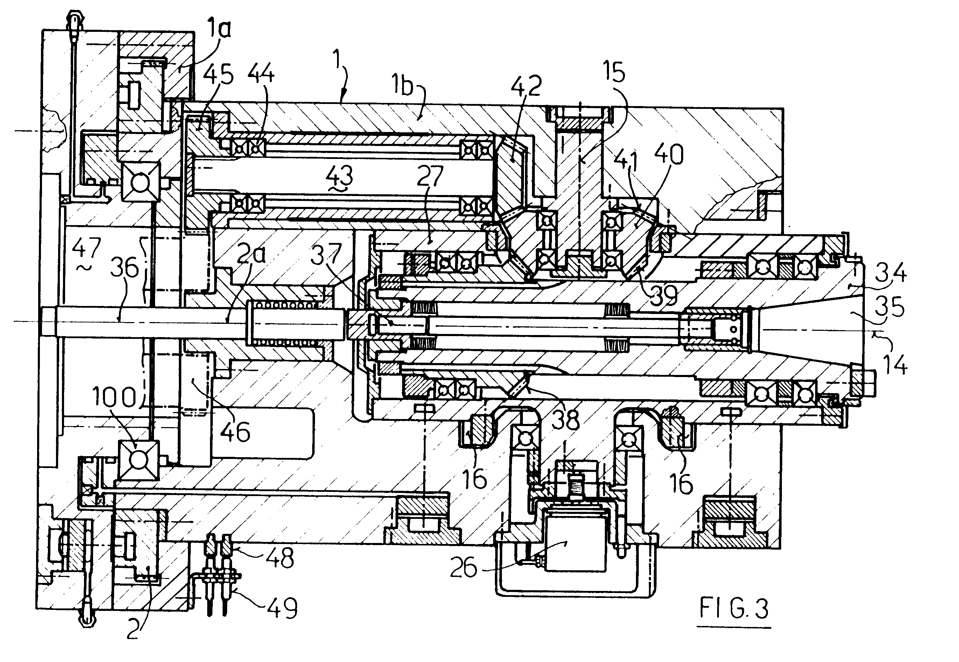

Fig. 3 zeigt einen Schnitt entlang der Linie III-III der Fig. 2. Es ist erkennbar, dass das Gehaeuse 1a fest mit der Werkzeugmaschine verbunden ist und um die Achse 14 drehbar das Gehaeuse 1b aufnimmt, um somit einen Fraes- und Bohrkopf zu schaffen, der gesamthaft mit 1 gekennzeichnet ist. Das Gehaeuse 1a nimmt drehbar den Zahnkranz 2 auf, der durch die in Fig. 3 nicht dargestellten Ritzel 4 und 5 angetrieben wird.

Das Gehaeuse 1b lagert die Schwenkwelle 15, mit der das Gehaeuse 27 um die Achse 15 verschwenkbar ist. In vorteilhafter Weise ist achsgleich zur Welle 15 der Encoder 26 angeordnet, um somit die genaue Winkellage der Schwenkwelle 15 gegenueber dem Gehaeuse 1b anzuzeigen.

Der zweite Zahnkranz 16, der es ermoeglicht dem Aufnahmegehaeuse 27 eine Schwenkbewegung zu verleihen, ist nur teilweise aus der Fig. 3 zu entnehmen. Es ist zu beruecksichtigen, dass die Welle 15, die den Zahnkranz 16 aufnimmt, senkrecht zur Achse 14 des Zahnkranzes 2 (Fig. 2) angeordnet ist.

Im Inneren des Gehaeuses 1b ist drehbar eine Spindel 34 gelagert, die eine konische Bohrung 35 zur Aufnahme des Schaftes des Werkzeuges 28 aufweist.

Im Inneren der Spindel 34 sind bekannte Hilfvorrichtungen 36 und 37 vorgesehen, die zum Festspannen des Werkzeugkegels in der Aufnahme 35 vorgesehen sind, und zum Ausstossen des Werkzeuges aus der Aufnahme 35 dienen.

Der Spindel 34 wird die Drehbewegung ueber ein erstes Kegelzahnrad 38 uebertragen, das mit dem hinteren Teilstueck der Spindel 34 verbunden ist. Das Kegelzahnrad 38 kaemmt mit einer ersten Verzahnung 39 eines weiteren Zahnrades 40, das auf seiner der Verzahnung 39 gegenueberliegenden Seite eine weitere Verzahnung 41 aufweist, mit der ein Kegelzahnrad 42 kaemmt, das fest mit der Welle 43 verbunden ist, die ueber Waelzlager 44 im Inneren des Gehaeuses 1b angeordnet ist.

Die Welle 43 nimmt an ihrem Ende, das dem Kegelzahnrad 42 gegenueberliegt, ein Zahnrad 45 auf, mit dem ein Zahnkranz 46 in Verbindung gebracht werden kann. Das Zahnrad 46 stellt ein mechanisches Kupplungselement dar. Der Zahnkranz 46 ist mit dem Antriebssystem der Maschinenspindel der Werkzeugmaschine verbunden und wird in eine Ausnehmung 47 des Gehaeues 1a eingefahren.

Die Arbeitsweise des erfindungsgemaessen Fraes- und Bohrkopfes 1 ist folgende:
Durch Antrieb des Zahnkranzes 2 ueber den Motor 13, kann das Gehaeuse 1b gesteuert um seine Achse 2a gedreht werden. Da der Encoder 14 mit eine NC-Steuereinrichtung wirkverbunden ist, kann in einfacher Weise das Encodersignal verarbeitet werden und auf den Gleichstrommotor 13 eingewirkt werden, um somit ein winkelgenaues Verschwenken gegenueber der Achse 2a durchzufuehren.

Gleichzeitig kann ueber den Zahnkranz 16, der ueber den Motor 25 angetrieben wird, eine gesteuerte Schwenkbewegung der Werkzeugspindel 34 um die Achse 15 erfolgen. Auch im diesem Fall wird unter Zuhilfenahme des Encoders 26 staendig die Winkellage (Achse 15) ueberwacht.

Mit besonderem Vorteil weist das Gehaeuse 1b Positionsanzeigevorrichtungen 49 und Anzeigemarken 48, z.B. Naehrungsschalter auf, wodurch des ermoeglicht wird, das Gehaeuse 1b nach einer Drehbewegung von ungefaehrt 180° erneut in entgegengesetztem Sinn zuverschwenken, um zu vermeiden, dass elektrische Verbindungskabel zerstoert oder beschaedigt werden.

Eine aehnliche Ueberwachungseinrichtung ist der Spindel 34 bzw. der Schwenkwelle 15 zugeordnet, um somit genau die Schwenkbewegung der Werkzeugspindel 34 um die Welle 15 zu ueberwachen.

Mit besonderem Vorteil sind die Gewindespindeln 19, 20, 7, 8, die auf den Wellen 9 und 21 angeordnet sind, durch Federpakete, in vorteilhafter Weise ueber Tellerfedern 50 vorgespannt, um dadurch ein eventuell auftretendes unerwuenschtes Spiel zwischen den Gewindespindeln 7, 8, 19, 20 und den zugeordneten Ritzeln 4, 5 und 17 auszugleichen.

## Patentansprüche

1. Fraes- und Bohrkopf, mit mehreren steuerbaren Achsen fuer eine werkzeugmaschine, wobei der Kopf aus einer Haltevorrichtung (1a) besteht, die mit der werkzeugmaschine (29) verbindbar ist und um eine erste Achse (2a) drehbar einen ersten Zahnkranz (2) lagert, der mit dem Gehaeuse (1b) des Fraes- und Bohrkopfes (1) verbunden ist, und im Inneren des drehbaren Gehaeuses (1b) ein weiterer Zahnkranz (16) um eine zweite Achse (15) drehbar gelagert ist, wobei jeder Zahnkranz (2, 16) ueber eine Gewindeschnecke mit einem steuerbaren Antriebsmotor (13; 25) in wirkverbindung steht und jedem Zahnkranz (2, 16) ein Encoder (14, 26) zur Anzeige der Winkellage zugeordnet ist, **dadurch gekennzeichnet**, dass mit jedem Zahnkranz in gleicher Ebene (2, 16) zwei Ritzel (4, 5; 17) kaemmen, deren Drehachsen parallel zur Achse (2a, 15) des zugeordneten Zahnkranzes (2 bzw 16) ausgerichtet sind, und jedes Ritzel (4, 5; 17) mit einer Gewindeschnecke (7, 8; 19, 20) in wirkverbindung steht, und die Gewindeschnecken (7, 8 bzw. 19, 20) eines Zahnkranzes (2 bzw. 16) auf einer welle (9; 21) angeordnet sind.

2. Fraes- und Bohrkopf, nach Patentanspruch 1, **dadurch gekennzeichnet**, dass jeder Gleichstrommotor (13, 25) und jeder Encoder (14, 26) mit einer NC-Steuereinheit wirkverbunden sind.

3. Fraes- und Bohrkopf, nach Patentanspruch 1, **dadurch gekennzeichnet**, dass jedes Ritzel (4, 5, 17), das mit dem entsprechenden Zahnkranz (2, 16) wirkverbunden ist, einstueckig mit einem weiteren Zahnrad (30, 31, 33, 34) ausgebildet ist, das groesseren Durchmesser aufweist und dass das Zahnrad (30, 31, 33, 34) mit groesserem Durchmesser mit einer angetriebenen Gewindeschnecke (7, 8, 19, 20) in wirkverbindung steht.

4. Fraes- und Bohrkopf, nach Patentanspruch 1, **dadurch gekennzeichnet**, dass die Werkzeugspindel (34) zur Aufnahme des Werkzeuges (28) mit einem ersten Kegelzahnrad (38) in Wirkverbidnung steht, welches im Inneren des Kopfes (16) mit der ersten Verzahnung (39) eines Zahnrades (40) in wirkverbindung steht und dieses Zahnrad (40) auf seiner, der Verzahnung (39) gegenueberliegenden Seite eine weitere Verzahnung (41) aufweist, die mit einem Kegelzahnrad (42) kaemmt, das mit einer welle (43) wirkverbunden ist, die ueber Waelzlager (44) im Inneren des Kopfes angeordnet ist, dass diese welle (43) fest mit einem Zahnrad (45) wirkverbunden ist, die mit einem Zahnkranz (46) kaemmt, das ein mechanisches Kupplungsglied darstellt, das mit der Antriebsvorrichtung der Maschinenspindel (34) der werkzeugmaschine wirkverbunden ist.

5. Fraes- und Bohrkopf, nach Patentanspruch 1, **dadurch** **gekennzeichnet**, dass die Gewindeschnecken (7, 8, 19, 20) der wellen (9 und 21) ueber Federmittel (50) zum Spielausgleich zwischen Antriebsritzel und zugehoerigem Zahnkranz vorgespannt sind.

6. Fraes- und Bohrkopf, nach Patentanspruch 5, **dadurch gekennzeichnet**, dass die Federmittel (50) aus Federpaketen, wie vorgespannten Tellerfedern bestehen.

## Claims

1. Milling and boring head with a plurality of controllable axes for a machine tool, the head consisting of a holding device (1a) which can be connected to the machine tool (29) and rotatably supports a first gear rim (2) about a first axis (2a), which gear rim (2) is connected to the housing (1b) of the milling and boring head (1), and in the interior of the rotatable housing (1b) a further gear rim (16) is rotatably mounted about a second axis (15), each gear rim (2, 16) being in operative connection with a controllable drive motor (13; 25) via a worm, and an encoder (14, 26) for indicating the angular position being allocated to each gear rim (2, 16), characterised in that two pinions (4, 5; 17) mesh with each gear rim (2, 16) in the same plane, the axes of rotation of which pinions (4, 5; 17) are orientated parallel to the axis (2a, 15) of the allocated gear rim (2 or 16), and each pinion (4, 5; 17) is in operative connection with a worm (7, 8; 19, 20), and the worms (7, 8 and 19, 20 resp.) of a gear rim (2 and 16 resp.) are arranged on a shaft (9; 21).

2. Milling and boring head according to Patent Claim 1, characterised in that each direct-current motor (13, 25) and each encoder (14, 26) are operatively connected to an NC control unit.

3. Milling and boring head according to Patent Claim 1, characterised in that each pinion (4, 5, 17), which is operatively connected to the corresponding gear rim (2, 16), is designed in one piece with a further gear (30, 31, 33, 34) which has a larger diameter, and in that the gear (30, 31, 33, 34) having a larger diameter is in operative connection with a driven worm (7, 8, 19, 20).

4. Milling and boring head according to Patent Claim 1, characterised in that the tool spindle (34) for accommodating the tool (28) is in operative connection with a first bevel gear (38) which in the interior of the head (16) is in operative connection with the first tooth system (39) of a gear (40), and this gear (40), on its side opposite the tooth system (39), has a further tooth system (41) which meshes with a bevel gear (42) which is operatively connected to a shaft (43) which is arranged in the interior of the head via rolling-contact bearings (44), in that this shaft (43) is firmly and operatively connected to a gear (45) which meshes with a gear (46) which constitutes a mechanical coupling member which is operatively connected to the drive device of the machine spindle (34) of the machine tool.

5. Milling and boring head according to Patent Claim 1, characterised in that the worms (7, 8, 19, 20) of the shafts (9 and 21) are preloaded via spring means (50) for the backlash compensation between drive pinions and associated gear rim.

6. Milling and boring head according to Patent Claim 5, characterised in that the spring means (50) consist of spring assemblies such as preloaded disc springs.

## Revendications

1. Tête de fraisage et de percement à axes multiples de réglage pour une machine-outil, la tête étant constituée d'un dispositif de support (1a) qui peut être relié à la machine-outil (29) et qui loge autour d'un premier axe (2a) de façon tournante une première couronne dentée (2) qui est reliée au boîtier (1d) de la tête de fraisage et de percement (1), et dans l'intérieur du boîtier tournant (1b) est logée de façon tournante une autre couronne dentée (16) autour d'un deuxième axe (15), chaque couronne dentée (2, 16) étant fonctionnellement reliée par l'intermédiaire d'une vis taraudée avec un moteur d'entraînement (13 ; 25) pouvant être commandé, et à chaque couronne dentée (2, 16) étant associé un codeur (14, 26) pour indiquer la position angulaire, caractérisée en ce que deux pignons (4, 5 ; 17) sont en prise avec chaque couronne dentée dans le même plan (2, 16), et dont les axes de rotation sont orientés parallèlement à l'axe (2a, 15) de la couronne dentée associée (2 et 16 respectivement), et en ce que chaque pignon (4, 5 ; 17) est fonctionnellement relié à une vis taraudée (7, 8 ; 19, 20), et en ce que les vis taraudées (7, 8 et 19, 20 respectivement) d'une couronne dentée (2 et 16) sont disposées sur un arbre (9; 21).

2. Tête de fraisage et de percement selon la revendication 1, caractérisée en ce que chaque moteur de courant continu (13, 25) et chaque codeur (14, 26) sont fonctionnellement reliés à une unité de commande NC.

3. Tête de fraisage et de percement selon la revendication 1, caractérisée en ce que chaque pignon (4, 5, 17) qui est fonctionnellement relié à la couronne dentée (2, 16) correspondante, est réalisé en une pièce avec une autre roue dentée (30, 31, 33, 34) qui présente un diamètre plus grand, est en ce que la roue dentée (30, 31, 33, 34) avec le diamètre plus grand est fonctionnellement reliée à une vis taraudée entraînée (7, 8, 19, 20).

4. Tête de fraisage et de percement selon la revendication 1, caractérisée en ce que la broche d'outil (34) pour la réception de l'outil (28) est fonctionnellement reliée à une première roue dentée conique (38) qui est fonctionnellement reliée à l'intérieur de la tête (16) avec la première denture (39) d'une roue dentée (40), et en ce que cette roue dentée (40) présente sur son côté opposé à la denture (39) une autre denture (41) qui vient en prise avec une roue dentée conique (42) qui est fonctionnellement reliée à un arbre (43) qui est disposé, par des paliers à roulement (44), dans l'intérieur de la tête, en ce que cet arbre (43) est activement relié fixement à une roue dentée (45) qui vient en prise avec une couronne dentée (46) qui représente un organe d'accouplement mécanique qui est fonctionnellement relié au dispositif d'entraînement de la broche de machine (34) de la machine-outil.

5. Tête de fraisage et de percement selon la revendication 1, caractérisée en ce que les vis taraudées (7, 8, 19, 20) des arbres (9 et 21)sont précontraintes par des moyens formant ressort (50) en vue de la compensation du jeu entre le pignon d'entraînement et la couronne dentée associée.

6. Tête de fraisage et de percement selon la revendication 5, caractérisée en ce que les moyens formant ressort (50) sont constitués par des blocs-ressort, tels que des ressorts à disques précontraints.
